# EUROPÄISCHE PATENTSCHRIFT

(11) **EP 2 371 513 B1**
(45) Veröffentlichungstag und Bekanntmachung des Hinweises auf die Patenterteilung: **08.11.2017**
(21) Anmeldenummer: 10158936.4
(22) Anmeldetag: 01.04.2010
(51) Int. Cl.: B29L 31/30, B29C 45/16, G07C 9/00

(54) **Elektronischer Schlüssel**
Electronic key
Clé électronique

(43) Veröffentlichungstag der Anmeldung: 05.10.2011
(73) Patentinhaber: Hella KGaA Hueck & Co., 59552 Lippstadt (DE)
(72) Erfinder: Hoffmann, Peter, 33100, Paderborn (DE)

(56) Entgegenhaltungen:
- WO-A1-2005/035915
- WO-A1-2005/061204
- WO-A1-2007/079896
- DE-A1- 19 915 969
- DE-A1-102006 010 896
- US-A- 4 867 663
- US-A1- 2003 042 625
- US-A1- 2009 128 288
- US-B1- 6 523 380

## Beschreibung

Die Erfindung betrifft einen elektronischen Schlüssel umfassend ein Gehäuse aus Kunststoff, das aus zwei Schalen zusammengesetzt ist, eine in dem Gehäuse befestigte Leiterplatte mit elektrischen und/oder elektronischen Bauteilen, die Sende- und/oder Empfangsvorrichtungen sowie Tastschalter umfassen, mindestens zwei Tasten die von einer Außenseite des Gehäuses bedienbar sind, wobei jede der Tasten auf einen zugeordneten der Schalter wirkt, wobei zwischen zwei benachbarten Tasten jeweils ein in das Gehäuse integrierter Steg angeordnet ist.
Die Erfindung betrifft weiterhin ein Verfahren zur Herstellung eines solchen elektronischen Schlüssels.

Solche Schlüssel werden zum Bedienen von Kraftfahrzeugen, insbesondere von PKW eingesetzt. Hierbei ist in einem Gehäuse eine Elektronik für eine Fernbedienung von z.B. Schließfunktionen einer Zentralverriegelung angeordnet. Die Bedienung erfolgt über auf mindestens einer Oberfläche des elektronischen Schlüssels angeordneten Tasten. Weiterhin kann an dem Gehäuse ein Halter für einen mechanischen Schlüsselbart, z.B. verschwenkbar, befestigt sein, das wie üblich sowohl für die Schließfunktionen als auch für z.B. Einschalten einer Zündung und Starten/ Stoppen eines Motors verwendbar ist.

Die WO 2005/035915 A beschreibt einen elektronischen Schlüssel, der ein nicht betätigbares Feld aufweist, um eine Trennung zwischen Tasten zu erreichen.

Aus der US 6,523,380 B ist ein Schlüssel für ein Kraftfahrzeug bekannt, der keine Tasten aufweist.

Die DE 199 15 969 A offenbart einen elektronischen Schlüssel, bei dem Tasten an einem unverformbaren Stützelement angeordnet sind.

Die US 4,867,663 A beschreibt ein Gusswerkzeug.

Die WO 2005/061 A beschreibt die Herstellung einer Abdeckung einer elektronischen Vorrichtung, z.B. eines mobilen Telefons.

In der DE 196 05 201 B4 ist ein elektronischer Schlüssel beschrieben. Der Schlüssel weist mehrere Tasten auf, die mittels Membranen an einem Gehäuse durch Verschweißen befestigt sind. Auf diese Weise wird eine Beweglichkeit der Tasten in eine vorbestimmte Druckrichtung gewährleistet. Zur vollständigen Abdichtung ist zwischen den Tasten und dem Gehäuse zusätzlich ein Dichtelement angeordnet, das eine Öffnung des Gehäuses abdeckt. Das Dichtelement ist in der selben Richtung beweglich wie die Tasten. Die Tasten wirken über das Dichtelement auf zugehörige Schalter.

Diese Schlüssel sind spritzwassergeschützt oder wasserdicht, was besondere Anforderungen an die Tasten stellt. So ist es bekannt, Dichtmatten aus geeignetem Material anzuordnen oder Übergänge zwischen dem Gehäuse und Tastenoberflächen als Membranen auszubilden.

Um Fehlbedienungen zu vermeiden, sind oft zwischen zwei benachbarten Tasten Stege angeordnet, die bisher einteilig mit einer zugehörigen Schale des Gehäuses ausgebildet sind.

Weiterhin sollen die Schlüssel edel wirken, das heißt, optisch ansprechend sein und lang andauernd bleiben. Dies erfordert entsprechende Robustheit und Unempfindlichkeit gegen Kratzen und Ähnliches. Vielfach ist es erwünscht, besonders die Stege zur optischen Gestaltung und Aufwertung des Gehäuses zu nutzen.

Zur Verbesserung der Optik der Schlüssel werden z.B. Teile des Gehäuses silbrig glänzend ausgeführt.

Hierfür ist es bekannt, die entsprechenden Teile zu lackieren oder mit einer Folie zu versehen. Dies ist nicht bei allen Kunststoffarten sicher durchführbar. Weiterhin sind die Folien und Lacke empfindlich gegen chemischen Angriff, Abrieb und Kratzen, so dass der Schlüssel relativ schnell unansehnlich wird.

Kappen sind aufwändig zu montieren und bei solchen aus Guss wegen der geringen Wandstärken bruchempfindlich; bei gebogenen oder gezogenen Teilen sind Mikrorisse unausbleiblich, was das Aussehen entsprechend beeinträchtigt.

Es ist daher eine erste Aufgabe der Erfindung, einen Schlüssel zu schaffen, der dauerhaft edel wirkt und dabei relativ einfach herzustellen ist.

Diese Aufgabe ist durch die Merkmale des Anspruchs 1 gelöst. Der Steg ist aus Metall vorgefertigt und von der einen Schale teilweise umspritzt. Hierdurch kann der Steg dauerhaft optisch edel gestaltet werden. Der Steg kann separat relativ einfach gefertigt und gegebenenfalls beschichtet werden. Mit dem teilweisen Umspritzen, das gleichzeitig mit der Herstellung der Schale erfolgt, ist der Steg fest in der Schale und somit im Gehäuse verankert.

Die zugehörigen Unteransprüche betreffen die vorteilhafte Ausgestaltung des Schlüssels.

Nach einer Alternative der Erfindung ist der Steg aus beschichtetem Zinkdruckguss gefertigt. Dieses Material ist leicht zu verarbeiten und weist ein relativ geringes spezifisches Gewicht auf.

In einer weiteren Alternative ist der Steg verchromt. Chrom hat eine große Härte und ist sehr beständig. Seine Oberfläche wirkt sehr edel.

In einer weiteren Alternative ist an einer der Innenseite des Gehäuses zugeordneten Fläche des Stegs ein Dorn ausgebildet. Hierdurch wird eine zentrische Krafteinleitung erzielt, um den Steg bei der Verarbeitung im Spritzgusswerkzeug abzudichten.

Weiterhin ist ein Spritzguss- Werkzeug beschrieben, das eine kostengünstige Herstellung des Schlüssels ermöglicht.

An einer Innenseite einer Aufnahme eines Spritzguss- Werkzeuges, die für den Steg bestimmt ist, ist ein umlaufender Zentrierring angeordnet. Dieser Zentrierring hält den Steg in der Aufnahme fest, so dass ein unbeabsichtigtes Herausfallen vermieden wird sowie eine exakte Positionierung des Stegs vor und während des Spritzgussprozesses gewährleistet ist. Hierdurch wird für jeden Steg eine hohe Maß- und Lagegenauigkeit erzielt. Dies beeinflusst besonders nach der Montage das Spaltmass zwischen dem Steg und den Tasten.

Vorteilhaft ist der Zentrierring so in eine entsprechende Nut eingesetzt, dass er aus der Fläche der Innenseite der Aufnahme herausragt. Hierdurch wird eine umlaufende gleichmäßige Flächenpressung auf den eingelegten Steg ausgeübt, und der Zentrierring ist auch während des Einsetzens des Stegs und während des Herausziehens nach dem Spritzen sicher in der Aufnahme gehalten, ohne seine Wirkung zu verlieren. Fertigungstoleranzen des Stegs werden durch das elastische Material des Zentrierrings ausgeglichen, so dass immer eine sichere Zentrierung erfolgt. Der Zentrierring muss bis zum Erreichen einer Verschleißgrenze nicht manipuliert werden.

Der Zentrierring ist z.B. entweder ein O- Ring, oder er weist einen länglichen rechteckigen Querschnitt mit gerundeten Schmalseiten auf.

Eine zweite Aufgabe besteht in der Schaffung eines Verfahrens zum Herstellen des Schlüssels.

Diese Aufgabe ist durch die Merkmale des Anspruchs 5 gelöst. Ein vorgefertigter Steg aus Metall wird in eine zugeordnete Aufnahme eines Spritzguss- Werkzeugs eingelegt und hier mittels eines Stempels unter vorbestimmtem Druck gehalten. Dann wird die Schale aus hartem Kunststoff gespritzt, wobei der Steg in einem Basisbereich umspritzt wird, und dann der Stempel zurückgezogen. Schließlich werden Dichtungen aus einem weichen Kunststoff an vorbestimmten Stellen der Schale und des Stegs aufgespritzt. Damit wird unter anderem auch die Stelle des Stegs umspritzt, die während des ersten Spritzgusses von dem Stempel bedeckt war. Auf diese Weise lässt sich die Schale herstellen, ohne dass es zu Dichtigkeitsproblemen kommen kann. Auch wird durch das Verschließen der nach innen gerichteten Seite des Stegs gewährleistet, dass die Elektronik durch die Schale gegen elektrische und elektromagnetische Einflüsse geschützt ist.

Anhand der beigefügten Zeichnungen wird die Erfindung nachfolgend näher erläutert. Dabei zeigen:
- Figur 1: eine perspektivische Ansicht eine Schlüssels,
- Figur 2: eine Draufsicht auf eine obere Schale des Schlüssels der Figur 1,
- Figur 3: einen Schnitt A - A durch die Schale der Figur 2,
- Figur 4: einen Schnitt durch einen Teil eines Spritzguss- Werkzeugs und
- Figur 5: einen alternativen Querschnitt eines Zentrierrings.

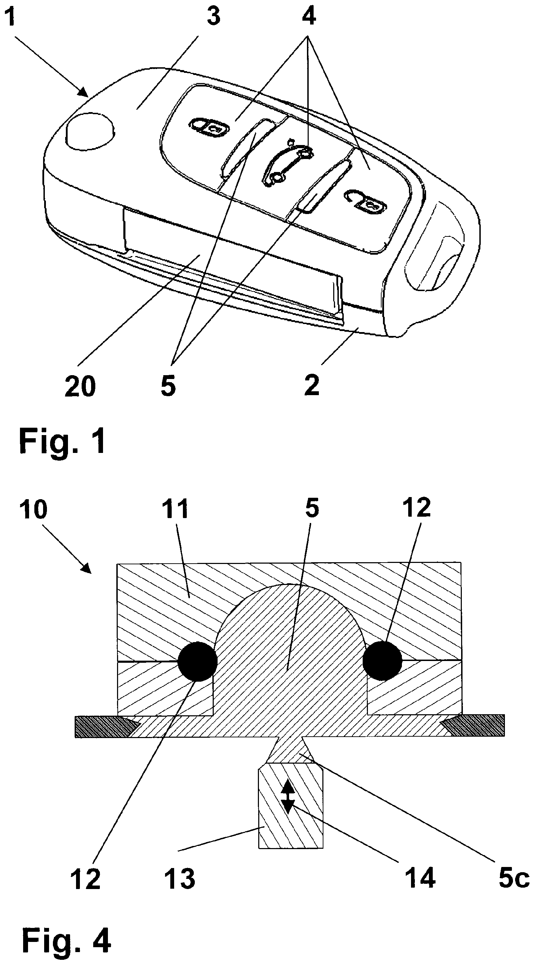

Wie aus der Figur 1 ersichtlich umfasst ein elektronischer Schlüssel ein Gehäuse 1, das aus einer unteren Schale 2 und einer oberen Schale 3 zusammengesetzt ist. An der oberen Schale 3 sind drei Tasten 4 zum Bedienen von Tastschaltern mit definierten Funktionen angeordnet. In dem Gehäuse 1 ist eine Leiterplatte mit elektrischen und/oder elektronischen Bauteilen, z.B. den Tastschaltern, angeordnet. Zwischen zwei benachbarten der Tasten 4 ist jeweils ein Steg 5 angeordnet, der ein versehentliches gleichzeitiges Drücken zweier der Tasten 4 verhindert. An dem Gehäuse 1 ist ein Halter für einen mechanischen Schlüsselbart 20 befestigt.

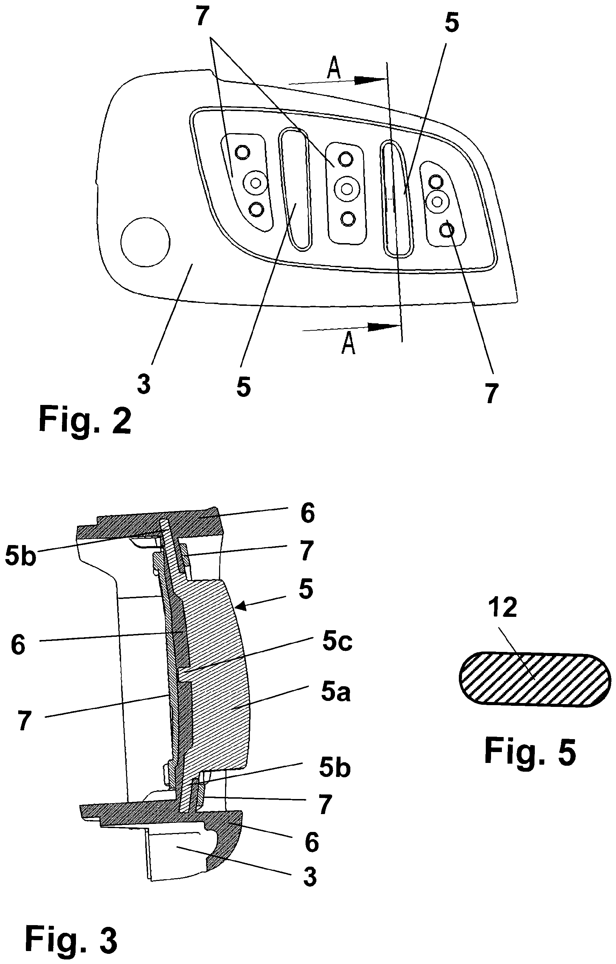

Wie aus den Figuren 2 und 3 besonders deutlich wird, umfasst die obere Schale 3 einen Rahmen 6, in dem die hier zwei Stege 5 befestigt sind. Der Rahmen 6 weist Im Bereich der Tasten 4 in etwa einen Querschnitt eines breit gezogenen H auf, wobei das H zwei Stempel und eine die Stempel verbindende Brücke aufweist. Die Stege 5 erstrecken sich im Wesentlichen zwischen den Stempeln und parallel zu der Brücke. Weiterhin sind an dem Rahmen 6 Dichtungen 7 an vorbestimmten Stellen befestigt. Die Dichtung 7 deckt die komplette Innengeometrie der oberen Schale 3 ab und ist ebenfalls in deren äußeren Kontur unterhalb der Tasten 4 angeordnet.

Jeder der Stege 5 weist einen in etwa quaderförmigen länglichen Grundkörper 5a mit gerundeten Kanten auf, wobei an einer einem Inneren des Gehäuses 1 zugewandten Unterseite des Grundkörpers 5a zungenartige Laschen 5b angeformt sind. Die Laschen 5b erstrecken sich in Längsrichtung des Stegs 5 bis in den zugeordneten Stempel. An der Unterseite des Grundkörpers 5a ist ein Ring nach Art einer Hutkrempe angeformt. In der Fläche der Unterseite des Grundkörpers 5a ist in etwa zentrisch ein Dorn 5c angeformt. Die Laschen 5b und der Ring sind von dem Material des Rahmens 6 umschlossen, so dass die Stege fest in die obere Schale 3 integriert sind. Der Rahmen 6 ist aus hartem Kunststoff und die Dichtungen 7 sind aus weichem Kunststoff gefertigt. Die Stege 5 sind aus Zinkdruckguss gefertigt und verchromt.
Die untere Schale 2 wird wie bekannt im Spritzguss aus Kunststoff gefertigt.
Ein Werkzeug 10 zur Herstellung der oberen Schale 3 im Spritzguss ist ausschnittsweise mit eingelegtem Steg 5 in der Figur 4 dargestellt. Das Werkzeug 10 umfasst für jeden der Stege 5 eine Aufnahme 11, die derart gestaltet ist, dass in ihr der Steg 5 bis zu dem Ring mit geringem Spiel aufgenommen werden kann. An einer Innenseite der Aufnahme 11 ist in der Nähe des Rings eine Nut eingelassen, in die ein Zentrierring 12 eingesetzt ist. Der Zentrierring 12 ragt aus der Innenseite für eine vorbestimmte Länge in das Innere der Aufnahme 11. Dieser Zentrierring gleicht das Spiel zwischen der Aufnahme 11 und dem Steg 5 aus. Der Innenseite der Aufnahme 11 gegenüber liegend ist ein Stempel 13 längs entsprechend dem Doppelpfeil 14 verfahrbar gelagert. Der Zentrierring 12 ist hier ein O-Ring.
Alternativ weist der Zentrierring 12 einen länglichen rechteckigen Querschnitt mit gerundeten Schmalseiten auf, wie er in der Figur 5 dargestellt ist..
Die Stege 5 werden im Zinkdruckguss vorgefertigt und verchromt. Die Stege 5 werden dann in die Aufnahme 11 eingelegt, durch den Zentrierring 12 in eine exakte vorbestimmte Position zentriert und durch den Stempel 13 im Bereich des Dorns 5c in diese mit vorbestimmter Kraft gedrückt. Anschließend wird der Rahmen 6 im Spritzguss geformt, wobei die Stege 5 teilweise - nämlich im Bereich ihrer Basis, das ist im Wesentlichen der Ring und die Laschen 5b - von dem Gussmaterial, also von hartem Kunststoff umschlossen werden. Hierdurch sind die Stege 5 stoffschlüssig fest in der oberen Schale 3 gehalten, also in die obere Schale 3 integriert. Der Stempel 13 wird von dem Steg 5 weg gezogen. Dann werden die Dichtungen 7 gespritzt, wobei auch die Stelle des Stegs 5, an der der Stempel 13 während des Spritzens des Rahmens 6 positioniert war, von der Dichtung 7 abgedeckt wird.
Anschließend wird der elektronische Schlüssel wie bekannt fertig montiert: An der oberen Schale 3 werden die Tasten angeklebt. In die unteren Schale 2 werden die Leiterplatte und eine Batterie eingelegt. Die beiden Schalen 2, 3 werden zu dem Gehäuse 1 zusammengesetzt und aneinander befestigt, wobei gleichzeitig eine Öse sowie der Halter für den mechanischen Schlüsselbart 20 in dem Gehäuse 1 gelagert werden. Das Befestigen erfolgt z.B. durch Laserschweißen.

### Bezugszeichenliste

- 1: Gehäuse
- 2: untere Schale
- 3: obere Schale
- 4: Taste
- 5: Steg
- 5a: Grundkörper
- 5b: Lasche
- 5c: Dorn
- 6: Rahmen
- 7: Dichtung
- 10: Werkzeug
- 11: Aufnahme
- 12: Zentrierring
- 13: Stempel
- 14: Doppelpfeil
- 20: Schlüsselbart

## Patentansprüche

1. Elektronischer Schlüssel, umfassend
ein Gehäuse (1) aus Kunststoff, das aus zwei Schalen (2, 3) zusammengesetzt ist,
eine in dem Gehäuse (1) befestigte Leiterplatte mit elektrischen und/oder elektronischen Bauteilen, die Sende- und/oder Empfangsvorrichtungen sowie Tastschalter umfassen,
mindestens zwei Tasten (4), die in einer oberen der Schalen (3) angeordnet und von einer Außenseite des Gehäuses (1) bedienbar sind, wobei jede der Tasten (4) auf einen zugeordneten der Tastschalter wirkt,
wobei zwischen zwei benachbarten Tasten (4) jeweils ein in das Gehäuse (1) integrierter Steg (5) angeordnet ist, wobei ein Spaltmass zwischen dem Steg (5) und den Tasten (4) vorhanden ist, **dadurch gekennzeichnet, dass** Dichtungen (7) aus einem weichen Kunststoff an vorbestimmten Stellen der oberen Schale (3) und des Stegs (5) aufgespritzt sind, dass der Steg (5) aus Metall vorgefertigt ist und dass er von der oberen Schale (3) teilweise umspritzt ist.

2. Schlüssel nach Anspruch 1, **dadurch gekennzeichnet, dass** der Steg (5) aus beschichtetem Zinkdruckguss gefertigt ist.

3. Schlüssel nach Anspruch 1 oder 2, **dadurch gekennzeichnet, dass** der Steg (5) verchromt ist.

4. Schlüssel nach einem der Ansprüche 1 bis 3, **dadurch gekennzeichnet, dass** an einer der Innenseite des Gehäuses (1) zugeordneten Fläche des Stegs (5) ein Dorn (5c) ausgebildet ist.

5. Verfahren zum Herstellen einer oberen Schale (3) eines Schlüssels der Ansprüche 1 bis 4,
wobei die Schale (3) aus Kunststoff gespritzt wird,
**dadurch gekennzeichnet, dass** ein vorgefertigter Steg (5) aus Metall in eine zugeordnete Aufnahme (11) eines Spritzguss- Werkzeugs (10) eingelegt und hier mittels eines Stempels (13) unter vorbestimmtem Druck gehalten wird,
dass dann die Schale (3) aus hartem Kunststoff gespritzt wird, wobei der Steg (5) in einem Basisbereich umspritzt wird,
dass dann der Stempel (13) zurückgezogen wird,
dass Dichtungen (7) aus einem weichen Kunststoff an vorbestimmten Stellen der Schale (3) und des Stegs (5) aufgespritzt werden und
dass schließlich Tasten an der Schale (3) angeklebt werden.

## Claims

1. Electronic key, comprising
a housing (1) made of plastic material, consisting of 2 halves (2, 3),
a printed circuit board fastened in the housing (1) with electric and/ or electronic components comprising transmitting and/ or receiving devices as well as push buttons,
at least two keys (4) which are arranged in an upper housing section (3) and which are operable from an outside of the housing (1), wherein each of the keys (4) acts on an assigned push button,
wherein a web (5) is arranged in the housing (1) between any two neighboring keys (4) in an integrated manner, a gap dimension exisiting between the web (5) and the keys (4),
**characterized in that**
seals (7) made of a soft plastic material are injected in predetermined places of the upper housing section (3) and the web (5),
that the web (5) is prefabricated and made from metal and that it is partly molded into the upper housing section (3).

2. Key according to Claim 1, **characterized in that** the web (5) is prefabricated and made from coated die-cast zinc.

3. Key according to Claim 1 or 3, **characterized in that** the web (5) is chrome-plated.

4. Key according to one of the Claims 1 to 3, **characterized in that** a pin (5c) is embodied on a surface of the web (5) assigned to the inside of the housing (1).

5. Procedure for the manufacture of an upper housing section (3) of an electronic key according to the Claims 1 to 4,
wherein the housing half (3) is injection-molded with plastic material,
**characterized in that** a prefabricated web (5) made from metal is inserted in an assigned seat (11) of an injection-molding tool (19) and is here held in place by means of a holding tool (13) with a predetermined pressure,
that subsequently the housing half (3) is injection-molded with hard plastic material, an area of the basis of the web (5) being moulded-in,
that then the holding tool (13) is withdrawn,
that seals (7) made from soft plastic material are applied and/or molded onto the housing half (3) and the web (5) in predetermined places and that finally keys are glued to the housing half (3).

## Revendications

1. Clé électronique comprenant
un boîtier (1) en matière plastique qui est composé de deux moitiés (2, 3),
un circuit imprimé monté dans le boîtier (1) avec des composants électriques et/ou électroniques comprenant des dispositifs d'émission et/ ou de réception ainsi que des boutons-poussoirs,
au moins deux boutons (4) qui sont disposés dans une moitié supérieure du boîtier (3) et qui peuvent être manipulés d'un côté extérieur du boîtier (1), chacun des boutons (4) agissant sur un bouton-poussoir affecté,
une âme (5) intégrée au boîtier (1) étant disposée chaque fois entre deux boutons (4) avoisinants, une taille de fente étant présente entre l'âme (5) et les boutons (4),
**caractérisé en ce que**
des joints d'étanchéité (7) d'une matière plastique souple sont injectés sur des endroits prédéterminés de la moitié supérieure du boîtier (3) et de l'âme (5), que l'âme (5) est préfabriquée et métallique et qu'elle est partiellement surmoulée par la moitié supérieure du boîtier (3).

2. Clé selon la revendication 1,
**caractérisée en ce que** l'âme (5) est fabriquée en zinc moulé sous pression revêtu.

3. Clé selon la revendication 1 ou 2,
**caractérisée en ce que** l'âme (5) est chromée.

4. Clé selon l'une des revendications 1 à 3,
**caractérisée en ce qu'une** broche (5c) est formée sur une surface de l'âme (5) attribuée au côté intérieur du boîtier (1).

5. Procédé pour la fabrication d'une moitié supérieure du boîtier (3) d'une clé électronique selon les revendications 1 à 4,
la moitié du boîtier (3) étant moulée par injection en matière plastique,
**caractérisé en ce qu'une** âme (5) préfabriquée et métallique est insérée dans un logement (11) attribué d'un moule à injection (10) et qui est tenue ici au moyen d'un outil de maintien (13) sous une pression prédéterminée,
que la moitié du boîtier (3) est ensuite moulée par injection en matière plastique rigide, l'âme (5) étant surmoulée dans une partie de la base,
que puis l'outil de maintien (13) est retiré,
que des joints d'étanchéité (7) d'une matière plastique souple sont injectés sur des endroits prédéterminés de la moitié du boîtier (3) et de l'âme (5) et
que finalement des boutons sont collés sur la moitié du boîtier (3).
